# EUROPEAN PATENT APPLICATION

(11) **EP 4 456 373 A1**
(43) Date of publication of application: **30.10.2024**
(21) Application number: 24161904.8
(22) Date of filing: 07.03.2024
(51) Int. Cl.: H02J 7/00, H02J 7/34

(54) **VOLTAGE EQUALIZATION APPARATUS OF BATTERY CELLS**

(30) Priority: 25.04.2023 KR 20230053914
(71) Applicant: Samsung SDI Co., Ltd., Yongin-si, Gyeonggi-do 17084 (KR)
(72) Inventor: Okui, Yoshiaki, 17084 Yongin-si, Gyeonggi-do (KR)
(74) Representative: Gulde & Partner

(57) **Abstract**

A voltage equalization apparatus (100) for a plurality of battery cells (Cell_i), including: a battery cell group (110) in which the plurality of battery cells are connected in series; a switching unit (120) electrically connected to the battery cell group and including a plurality of switching elements; a capacitor (130) electrically connected to the switching unit; and a controller (140) electrically connected to the battery cell group and the switching unit, and configured to receive respective voltages of the plurality of battery cells, and to control the plurality of switching elements to turn on or off according to the voltage levels of the plurality of battery cells, wherein the capacitor is connected in parallel with at least one battery cell of the battery cell group through the control of the switching unit by the controller.

## Description

### BACKGROUND

### 1. Field

Aspects of some embodiments of the present disclosure relate to a voltage equalization apparatus of battery cells.

### 2. Description of the Related Art

An energy storage device in which a plurality of battery cells are connected in series and/or in parallel may have a capacity required by a system. Because the energy storage device includes many battery cells, a voltage deviation may occur between the battery cells. If there is a voltage imbalance between the plurality of battery cells, a difference may also occur between remaining voltages when the battery cells are discharged. Accordingly, in order to completely discharge a battery cell having a higher voltage, a battery cell having a lower voltage may be over-discharged. To prevent this, when discharging is performed based on battery cells having low voltages, battery cells having high voltages may not be completely discharged, and thus, a problem in which the energy usage rate of the entire battery system is lowered may occur.

The above information disclosed in this Background section is only for enhancement of understanding of the background and therefore the information discussed in this Background section does not necessarily constitute prior art.

### SUMMARY

The present invention is set out in the appended set of claims, wherein the drawings and respective description relate to advantageous embodiments thereof. In order to solve a problem in which the energy usage rate of a battery system is lowered, in a system including a plurality of battery cells, a voltage equalization apparatus for the plurality of battery cells may be used. In the voltage equalization apparatus, a cell equalization circuit using resistance (shunt resist R) may monitor each cell, select a cell having the largest voltage, among the respective cells, and connect the selected cell to the resist for equalization with the rest cells. The voltage equalization apparatus may be relatively easy to manufacture, but may generate undesirable levels of heat and consume undesirable levels of energy from the resistance for equalization. In addition, in an active (trans) method, an expensive transformer may be provided for each battery cell to charge each battery cell, and controlling may be difficult, while the efficiency thereof may be higher than the resistance method. In addition, because an expensive transformer is required for each battery cell, the size may increase, and a relatively high cost may be incurred.

It was an object of the present invention to provide a voltage equalization apparatus of battery cells, which may enable voltage equalization in a relatively short time without deteriorating efficiency by controlling electrical connections between a plurality of battery cells connected in series and a capacitor through a plurality of switching elements.

A voltage equalization apparatus of battery cells according to the present invention may include: a battery cell group in which a plurality of battery cells are connected in series; a switching unit electrically connected to the battery cell group and including a plurality of switching elements; a capacitor electrically connected to the switching unit; and a controller which is electrically connected to the battery cell group and the switching unit, receives respective voltages of the plurality of battery cells, and controls the plurality of switching elements to turn on or off according to the voltage levels of the plurality of battery cells, wherein the capacitor is connected in parallel with at least one battery cell of the battery cell group through the control of the switching unit by the controller.

According to some embodiments, in the battery cell group, n battery cells may be sequentially connected in series, and the switching unit may include: a first switching unit including n+1 switching elements electrically connected to positive or negative electrodes of the n battery cells; and a second switching unit including n switching elements electrically connected to the n battery cells in parallel with each other.

According to some embodiments, in the respective switching elements of the first switching unit, a first electrode may be electrically connected to a positive electrode and a negative electrode of each of the n battery cells of the battery cell group, respectively, and a second electrode may be electrically connected to the first electrode and the second electrode of each of the n switching elements of the second switching unit, respectively.

According to some embodiments, control electrodes of (n + 1) switching elements of the first switching unit and control electrodes of n switching elements of the second switching unit may be electrically connected to the controller and turned on or off by a control signal of the controller.

According to some embodiments, after charging the capacitor by electrically connecting in parallel to the capacitor a battery cell having the largest voltage in the battery cell group, the controller may charge the battery cell as the capacitor is discharged by electrically connecting in parallel to the capacitor a battery cell having the smallest voltage in the battery cell group.

According to some embodiments, after charging the capacitor by electrically connecting in parallel to the capacitor two battery cells having the largest voltage in the battery cell group, the controller may charge the battery cell as the capacitor is discharged by electrically connecting in parallel to the capacitor a battery cell having the smallest voltage in the battery cell group.

According to some embodiments, the two battery cells having the largest voltage in the battery cell group may be connected in series, and the two battery cells connected in series may be connected in parallel to the capacitor.

According to some embodiments, the controller may periodically monitor and compare a plurality of battery cells included in the battery cell group to identify and select a battery cell having the largest voltage and a battery cell having the smallest voltage.

According to some embodiments, the battery cell group may include a first battery cell, a second battery cell, ... , an nth battery cell, the negative electrode of the first battery cell may be electrically connected to the positive electrode of the second battery cell, the negative electrode of the second battery cell may be electrically connected to the positive electrode of the third battery cell, and the negative electrode of the (n-1)th battery cell may be electrically connected to the positive electrode of the nth battery cell.

According to some embodiments, the first switching unit may include a 1a switching element, a 2a switching element, ... , and an na switching element, of which the first electrodes may be electrically connected to the negative electrodes of the first battery cell, the second battery cell, ... , the nth battery cells, respectively, and a 0a switching element of which the first electrode is electrically connected to the positive electrode of the first battery cell.

According to some embodiments, the second switching unit may include a 1b switching element, a 2b switching element, . . . , and an nb switching element, which are electrically connected in parallel to the first battery cell, the second battery cell, . . . , and the nth battery cells, respectively.

According to some embodiments, the 1a switching element, the 2a switching element, . . . , and the na switching element of the first switching unit may have second electrodes respectively electrically connected to the second electrodes of the 1b switching element, the 2b switching element, . . . , and the nb switching element of the second switching unit, and the second electrode of the 0a switching element may be electrically connected to the first electrode of the 1b switching element of the second switching unit.

According to some embodiments, even when the battery cell group is in charge/discharge mode, the controller may periodically control driving of the switching unit to equalize voltages of the plurality of battery cells included in the battery cell group through the capacitor.

According to some embodiments, when turning on two or more switching elements, the controller may apply an on/off control signal at a higher frequency than the frequency at which a control signal for turning on one switching element turns on another switching element.

According to some embodiments, wherein the control of the switching unit 120 by the controller 140 may be performed periodically at time intervals.

### BRIEF DESCRIPTION OF DRAWINGS

FIG. 1 is a schematic diagram showing a voltage equalization apparatus of battery cells according to some embodiments of the present disclosure.
FIGS. 2 and 3 are examples showing discharging and charging modes of a plurality of battery cells in the voltage equalization apparatus of the battery cells of FIG. 1 according to some embodiments of the present disclosure.
FIGS. 4 and 5 are other diagrams showing discharging and charging modes of a plurality of battery cells in the voltage equalization apparatus of the battery cells of FIG. 1 according to some embodiments of the present disclosure.
FIGS. 6A and 6B show simulation results of the voltage equalization apparatus of the battery cell group shown in FIG. 1 according to some embodiments of the present disclosure.

### DETAILED DESCRIPTION

Hereinafter, aspects of some embodiments of the present disclosure will be described in more detail with reference to the accompanying drawings.

Aspects of some embodiments of the present disclosure are provided to more completely explain aspects of some embodiments of the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Aspects of some embodiments of the present disclosure will now be described in more detail with reference to the accompanying drawings to the extent that a person skilled in the art to which the present disclosure belongs can easily implement embodiments according to the present disclosure.

Here, the same reference numerals are attached to parts having similar configurations and operations throughout the specification. In addition, when a part is said to be electrically coupled to another part, this includes not only a case where it is directly connected but also a case where it is connected with another element interposed therebetween.

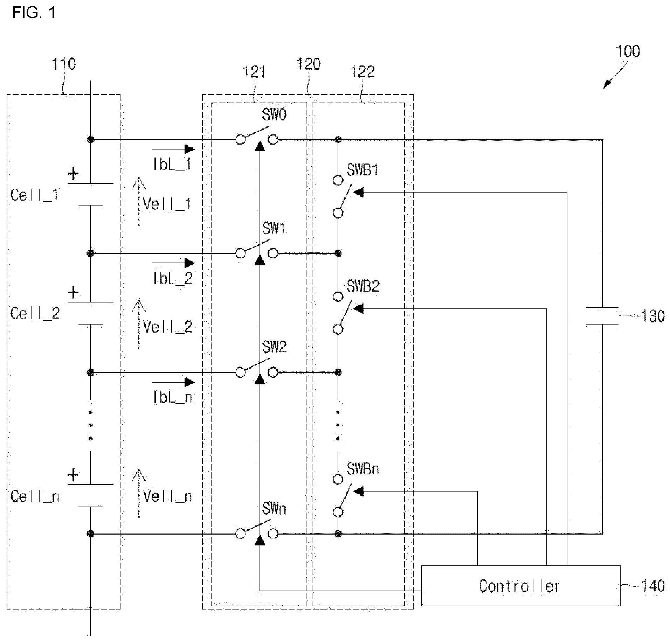

Referring to FIG. 1, a schematic diagram showing a voltage equalization apparatus of battery cells according to some embodiments of the present disclosure is shown.

As shown in FIG. 1, the voltage equalization apparatus 100 may include a battery cell group 110 in which a plurality of battery cells are connected in series, a switching unit (or switching circuit or switch or switching component) 120 electrically connected to the battery cell group 110, a capacitor 130 which is configured to be connected in parallel with at least one battery cell of the battery cell group 110 under the control of the switching unit 120, and a controller 140 for controlling the driving of the switching unit 120 according to the voltage of the battery cell group 110. Here, the switching unit 120 may include a plurality of switching elements, and may connect at least one battery cell in parallel to the capacitor 130 according to the operations of the plurality of switching elements. Here, the voltage equalization apparatus 100 can be variously applied to a battery module including a plurality of battery cells connected in series, a battery system, an energy storage device, or an equivalent device thereof.

The battery cell group 110 may include a plurality of battery cells connected in series. For example, when the battery cell group 110 includes n battery cells, a first battery cell Cell_1, a second battery cell Cell_2, ... , and an nth battery cell Cell_n, may be included. In addition, the first battery cell Cell_1 to the nth battery cell Cell_n may be sequentially connected in series. For example, the negative electrode of the first battery cell Cell_1 is electrically connected to the positive electrode of the second battery cell Cell_2, the negative electrode of the second battery cell Cell_2 may be electrically connected to the positive electrode of a third battery cell, and the negative electrode of an (n-1)th battery cell may be electrically connected to the positive electrode of the nth battery cell Cell_n.

In addition, the switching unit 120 electrically connected to the battery cell group 110 may be included. The switching unit 120 may include a first switching unit 121 electrically connected to the positive electrodes or the negative electrodes of the first battery cell Cell_1, the second battery cell Cell_2, ... , and the nth battery cell Cell_n, respectively, and a second switching unit 122 connected in parallel to the first battery cell Cell_1, the second battery cell Cell_2, ... , and the nth battery cell Cell_n, respectively. The switching unit 120 is electrically connected between the battery cell group 110 and the capacitor 130, and may control an electrical connection between each of the first battery cell Cell_1, the second battery cell Cell_2, ... , and the nth battery cell Cell_n and the capacitor 130.

When the first switching unit 121 includes n battery cells, (n+1) switching elements SW0, SW1, SW2, ..., and SWn may be included. The first switching unit 121 may include a 0a switching element SW0, a 1a switching element SW1, a 2a switching element SW2, . . . , and an na switching element SWn. First electrodes of the switching elements SW0, SW1, SW2, ...,and SWn of the first switching unit 121 may be electrically connected to the positive and negative electrodes of the first battery cell Cell_1, the second battery cell Cell_2, ... , and the nth battery cell Cell_n, respectively. For example, the first electrode of the 0a switching element SW0 may be electrically connected to the positive electrode of the first battery cell Cell_1, the first electrode of the 1a switching element SW1 may be electrically connected between the negative electrode of the first battery cell Cell_1 and the positive electrode of the second battery cell Cell_2, the 2a switching element SW2 may be electrically connected between the negative electrode of the second battery cell Cell_2 and the positive electrode of the third battery cell, and an na switching element SWn may be electrically connected between the negative electrode of the (n-1)th battery cell and the positive electrode of the nth battery cell Cell_n.

In addition, when the second switching unit 122 includes n battery cells, n switching elements SWB1, SWB2, ..., and SWBn may be included. The second switching unit 122 may include a 1b switching element SWB1, a 2b switching element SWB2,..., and an nb switching element SWBn. Here, the 1b switching element SWB1, the 2b switching element SWB2,..., and the nb switching element SWBn may be connected in series. In addition, the 1b switching element SWB1, the 2b switching element SWB2,..., and the nb switching element SWBn connected in series may be connected in parallel to the first battery cell Cell_1, the second battery cell Cell_2, ... , and the nth battery cell Cell_n, respectively.

In the 0a switching element SW0 of the first switching unit 121, the first electrode may be electrically connected to the positive electrode of the first battery cell Cell_1, and the second electrode may be electrically connected to the first electrode of the capacitor 130 and the first electrode of the 1b switching element SWB1 of the second switching unit 122.

In the 1a switching element SW1 of the first switching unit 121, the first electrode may be electrically connected to the negative electrode of the first battery cell Cell_1 and the positive electrode of the second battery cell Cell_2, and may be electrically connected between the second electrode of the 1b switching element SWB1 of the second switching unit 122 and the first electrode of the 2b switching element SWB2.

In the na switching element SWn of the first switching unit 121, the first electrode may be electrically connected to the negative electrode of the nth battery cell Cell_n, and the second electrode may be electrically connected to the second electrode of the capacitor 130 and the second electrode of the nb switching element SWBn of the second switching unit 122.

That is, the switching elements SW1, SW2, ..., and SWn of the first switching unit 121 may turn on or off portions between the negative electrodes of the battery cells Cell_1, Cell_2, ..., Cell_n and the second electrodes of the switching elements SWB1, SWB2, ..., SWBn of the second switching unit 122. In addition, the 0a switching element SW0 of the first switching unit 121 may turn on or off portions between the positive electrode of the first battery cell Cell_1 and the first electrode of the 1b switching element SWB1 of the second switching unit 122 and the first electrode of the capacitor 130.

In the 1b switching element SWB1 of the second switching unit 122, the first electrode may be electrically on or off between the second electrode of the 0a switching element SW0 and the first electrode of the capacitor 130, and the second electrode may be electrically on or off between the second electrode of the 1a switching element SW1 and the first electrode of the 2b switching element SWB2.

In the 2b switching element SWB1 of the second switching unit 122, the first electrode may be electrically on or off between the second electrode of the 1a switching element SW1 and the second electrode of the 1b switching element SWB1, and the second electrode may be electrically on or off between the second electrode of the 2a switching element SW2 and the first electrode of a 3b switching element.

In the nb switching element SWBn of the second switching unit 122, the first electrode may be electrically turned on or off between the first electrode of the na switching element SWn and the second electrode of the n-1b switching element SWn-1, and the second electrode may be electrically turned on or off between the second electrode of the second switching element SWn and the second electrode of the capacitor 130.

That is, the switching elements SWB1, SWB2, ...,and SWBn may turn on or off portions between the second electrodes of the switching elements SW1, SW2, ..., and SWn of the first switching unit 121 and the second electrodes of the immediately preceding switching element switching elements SW0, SW1, ..., and SWn-1, respectively.

The first electrode and the second electrode of the capacitor 130 may be electrically connected to the switching unit 120. The capacitor 130 may be electrically connected to at least one of the first battery cell Cell_1, the second battery cell Cell_2, ... , and the nth battery cell Cell_n included in the battery cell group 110 by the on or off operations of the respective switching elements of the switching unit 120.

The controller 140 may be electrically connected to the battery cell group 110 and the switching unit 120. The controller 140 may receive voltages of the respective battery cells Cell_1, Cell_2, ..., and Cell_n included in the battery cell group 110. That is, the controller 140 may periodically monitor the voltages of the respective battery cells Cell_1, Cell_2, ..., and Cell_n included in the battery cell group 110. The controller 140 may include a plurality of comparators, and may identify and select a battery cell having the largest voltage and a battery cell having the smallest voltage among the battery cells Cell_1, Cell_2, ..., and Cell_n through the plurality of comparators. According to one embodiment, the controller 140 may be configured to periodically monitor and compare a plurality of battery cells included in the battery cell group 110 to identify and select a battery cell having a largest voltage and a battery cell having a smallest voltage.

The controller 140 may be electrically connected to control electrodes of a plurality of switching elements included in the switching unit 120. The controller 140 may be electrically connected to the control electrodes of the switching element SW1, SW2, ..., and SWn of the first switching unit 121 and the control electrodes of the switching elements SWB1, SWB2, ..., and SWBn of the second switching unit 122, and thus can control the switching elements SW1, SW2, ..., and SWn and the switching elements SWB1, SWB2, ..., and SWBn to be turned on or off. The controller 140 may apply control signals for turning on or off the switching elements SW1, SW2, ..., and SWn and the switching elements SWB1, SWB2, ..., and SWBn to the control electrodes. Here, the control signals may be signals of which the on/off time has periodicity. In addition, when turning on two or more switching elements, the controller 140 may apply an on/off control signal at a higher frequency than the frequency at which a control signal for turning on one switching element turns on another switching element.

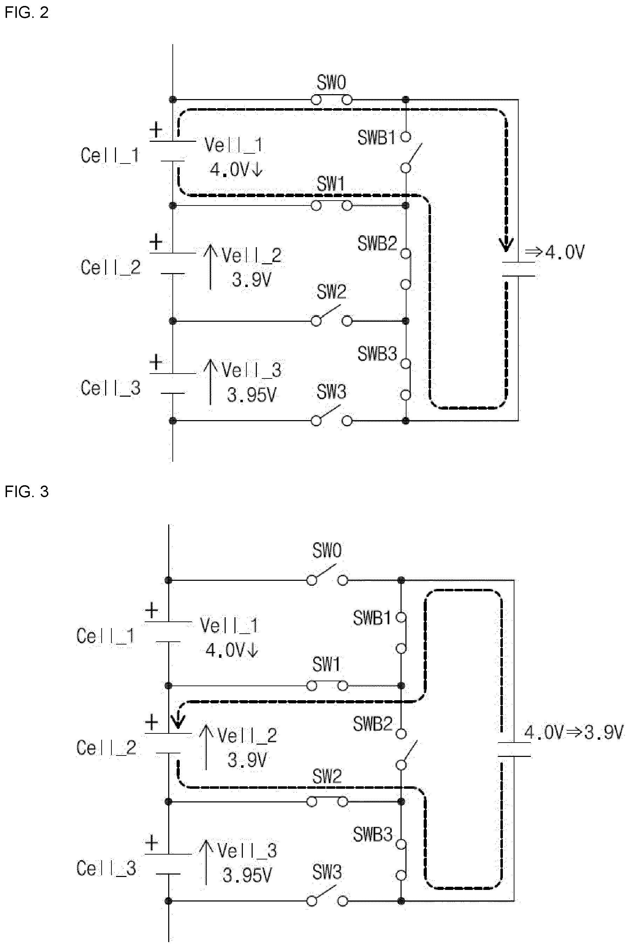

The controller 140 may control driving of the switching unit 120 according to the voltage level of the battery cell group 110 to electrically connect selected battery cells of the battery cell group 110 to the capacitor 130. For example, the controller 140 may charge the capacitor 130 with the largest voltage of the battery cell group 110 by electrically connecting a battery cell having the largest voltage among the battery cell group 110 to the capacitor 130. Thereafter, the controller 140 may balance voltages in the battery cell groups 110 by electrically connecting the battery cell having the smallest voltage in the battery cell group 110 to the capacitor 130 to discharge the voltage charged in the capacitor 130 by the battery cell. Here, when charging the capacitor 130, the controller 140 may charge the capacitor 130 through two battery cells having the largest voltage values in the battery cell group 110. Whether one or two battery cells are connected when the capacitor 130 is charged may be preset and stored in the controller 140.A voltage equalization method through charging and discharging of the battery cell group 110 under the control of the controller 140 will be described in detail with reference to FIGS. 2 and 3. FIG. 2 is a schematic diagram of the voltage equalization apparatus 100 of battery cells, in which a discharge mode of the battery cell group 110 is shown, and FIG. 3 is a schematic diagram of the voltage equalization apparatus 100 of battery cells, in which a charge mode of the battery cell group 110 is shown. In addition, referring to FIGS. 2 and 3, for convenience of description, three battery cell groups 110 are illustrated, but the number of battery cell groups 110 may vary in various manners and is not limited in the present disclosure.

In FIGS. 2 and 3, in the battery cell group 110, after the capacitor 130 is charged through one battery cell having the largest voltage value, the voltage stored in the capacitor 130 is discharged to one battery cell having the smallest voltage value, thereby achieving voltage equalization of battery cells.

According to one embodiment, after charging the capacitor 130 by electrically connecting in parallel to the capacitor 130 a battery cell having a largest voltage in the battery cell group 110, the controller 140 may be configured to charge the battery cell as the capacitor 130 may be discharged by electrically connecting in parallel to the capacitor 130 a battery cell having a smallest voltage in the battery cell group 110.

For example, the first battery cell Cell_1 may have a voltage of 4 V, the second battery cell Cell_2 may have a voltage of 3.9 V, and the third battery cell Cell_3 may have a voltage of 3.95 V. Here, the voltage of the first battery cell Cell_1 may be largest and the voltage of the second battery cell Cell_2 may be smallest.

The voltage of the battery cell group 110 may be transmitted to the controller 140, and, in order to charge the capacitor 130, the controller 140 may control the on or off operation of each switching element of the switching unit 120 to allow the first battery cell Cell_1 having the largest voltage to be connected in parallel with the capacitor 130. Thereafter, the controller 140 may control the on or off operation of each switching element of the switching unit 120 to allow the second battery cell Cell_2 having the smallest voltage to be connected in parallel with the capacitor 130, and thus can charge the second battery cell Cell_2 by the voltage stored in the capacitor 130. That is, the electrical connection between the battery cell group 110 and the capacitor 130 may be controlled, and thus, voltage equalization of a plurality of battery cells connected in series may be performed through charging or discharging.

Here, in an initial state, each switching element of the switching unit 120 may maintain an off state. In addition, controlling the switching unit 120 of the controller 140 may be performed periodically at time intervals (e.g., set or predetermined time intervals). That is, voltage equalization between the battery cell groups 110 may be periodically performed through the capacitor 130.

As shown in FIG. 2, the capacitor 130 may be charged through the first battery cell Cell_1 having the largest voltage value. Here, the controller 140 may turn on the 0a switching element SW0 and the 1a switching element SW1 of the first switching unit 121, and may turn on the 2b switching element SWB2 and the 3b switching element SWB3 of the second switching unit 122. Here, the 2a switching element SW2 and the 3a switching element SW3 of the first switching unit 121 may be in an off state, and the 1b switching element SWB1 of the second switching unit 122 may be in an off state. Accordingly, the controller 140 may electrically connect the first battery cell Cell_1 having the largest voltage value to the capacitor 130 to charge the capacitor 130 to 4V, which is the voltage of the first battery cell Cell_1.

Then, as shown in FIG. 3, the second battery cell Cell_2 having the smallest voltage value may be electrically connected to the capacitor 130, so that the capacitor 130 is discharged and the second battery cell Cell_2 is charged. Here, the controller 140 may turn on the 1a switching element SW1 and the 2a switching element SW2 of the first switching unit 121, and may turn on the 1b switching element SWB1 and the 3b switching element SWB3 of the second switching unit 122. In addition, the controller 140 may turn off the 0a switching element SW0 and the 3a switching element SW3 of the first switching unit 121, and may turn off the 2b switching element SWB2 of the second switching unit 122. Therefore, the controller 140 may electrically connect the second battery cell Cell_2 having the smallest voltage value to the capacitor 130, and thus, voltage balancing can be achieved between the capacitor 130 and the second battery cell Cell_2. Here, because the capacitor 130 is electrically connected to the second battery cell Cell_2 having 3.9 V in a state of being charged at 4 V, which is a largest voltage value, the capacitor 130 may be discharged, and the second battery cell Cell_2 may be charged.

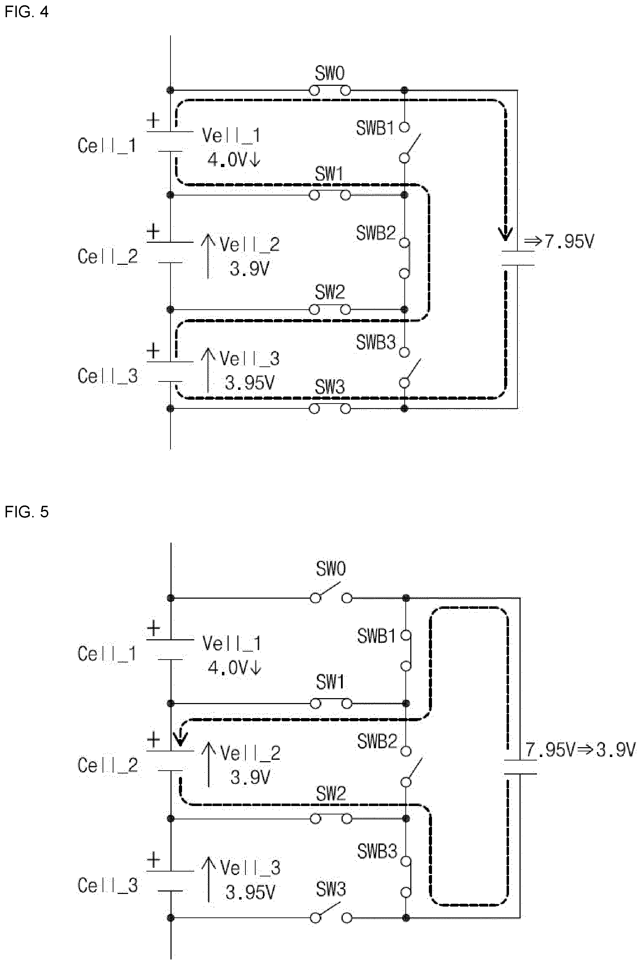

FIG. 4 is a schematic diagram of the voltage equalization apparatus 100 of battery cells, in which a discharge mode of the battery cell group 110 is shown, and FIG. 5 is a schematic diagram of the voltage equalization apparatus 100 of battery cells, in which a charge mode of the battery cell group 110 is shown. In addition, referring to FIGS. 4 and 5, for convenience of description, three battery cell groups 110 are illustrated, but the number of battery cell groups 110 may vary in various manners and is not limited in the present disclosure.

In FIGS. 4 and 5, in the battery cell group 110, after the capacitor 130 is charged through two battery cell having the largest voltage value, the voltage stored in the capacitor 130 is discharged to one battery cell having the smallest voltage value, thereby achieving voltage equalization of battery cell group 110.

According to an alternative embodiment, after charging the capacitor 130 by electrically connecting in parallel to the capacitor 130 two battery cells having a largest voltage in the battery cell group 110, the controller 140 may be configured to charge the battery cell as the capacitor 130 may be discharged by electrically connecting in parallel to the capacitor 130 a battery cell having a smallest voltage in the battery cell group 110.

According to one embodiment, the two battery cells having the largest voltage in the battery cell group 110 may be connected in series, and the two battery cells connected in series may be connected in parallel to the capacitor 130.

For example, the first battery cell Cell_1 may have a voltage of 4V, the second battery cell Cell_2 may have a voltage of 3.9V, and the third battery cell Cell_3 may have a voltage of 3.95V. Here, the voltage of the first battery cell Cell_1 may be largest, the voltage of the third battery cell Cell_3 may be next largest, and the voltage of the second battery cell Cell_2 may be smallest.

The voltage of the battery cell group 110 may be transmitted to the controller 140, and the controller 140 may control the on or off operation of each switching element of the switching unit 120 to charge the capacitor 130, thereby controlling the first battery cell Cell_1 having the largest voltage and the third battery cell Cell_3 to be electrically connected to the capacitor 130. Thereafter, the controller 140 may control the on or off operation of each switching element of the switching unit 120 to allow the second battery cell Cell_2 having the smallest voltage to be connected to the capacitor 130, and thus, the second battery cell Cell_2 may be charged by the voltage stored in the capacitor 130. That is, the electrical connection between the battery cell group 110 and the capacitor 130 may be controlled, and thus, voltage equalization between the battery cell groups 110 may be performed through charging or discharging.

According to one embodiment, in response to the battery cell group 110 which may be in a charge/discharge mode, the controller 140 may be configured to periodically control driving of the switching unit 120 to equalize voltages of the plurality of battery cells included in the battery cell group 110 through the capacitor 130.

In addition, controlling the switching unit 120 by the controller 140 may be performed periodically at time intervals (e.g., set or predetermined time intervals). That is, the voltage equalization of the battery cell group 110 may be periodically performed through the capacitor 130.

As shown in FIG. 4, the capacitor 130 may be charged through the first battery cell Cell_1 and the third battery cell Cell_3 having the highest voltage values. Here, the controller 140 may turn on the 0a switching element SW0, the 1a switching element SW1, the 2a switching element SW2, and the 3a switching element SW3 of the first switching unit 121, and may turn on the 0a switching element SW0, the 1a switching element SW1, the 2a switching element SW2, and the 3a switching element SW3 of the first switching unit 121, and may turn on the 2b switching element SWB2 of the second switching unit 122. Here, the 1b switching element SWB1 and the 3b switching element SWB3 of the second switching unit 122 may be in an off state. Therefore, the controller 140 may electrically connect the first battery cell Cell_1 and the third battery cell Cell_3 connected in series to the capacitor 130 in parallel. That is, the capacitor 130 can be charged to 7.95 V, which is the sum of the voltages of the first battery cell Cell_1 and the third battery cell Cell_3.

Next, as shown in FIG. 5, the second battery cell Cell_2 having the smallest voltage value may be electrically connected to the capacitor 130, and thus, the capacitor 130 may be discharged and the second battery cell Cell_2 may be charged. Here, the controller 140 may turn on the 1a switching element SW1 and the 2a switching element SW2 of the first switching unit 121, and may turn on the 1b switching element SWB1 and the 3b switching element SWB3 of the second switching unit 122. In addition, the controller 140 may turn off the 0a switching element SW0 and the 3a switching element SW3 of the first switching unit 121, and may turn off the 2b switching element SWB2 of the second switching unit 122. Therefore, the controller 140 may connect the second battery cell Cell_2 having the smallest voltage value in parallel with the capacitor 130, thereby achieving voltage balancing between the capacitor 130 and the second battery cell Cell_2. Here, because the capacitor 130 is electrically connected to the second battery cell Cell_2 having 3.9 V in a state of being charged at 7.95 V, the capacitor 130 may be discharged and the second battery cell Cell_2 may be charged.

In the cell balancing, the capacitor 130 is charged with a high voltage through two battery cells, and thus, when the voltage stored in the capacitor 130 is discharged with one battery cell having the smallest voltage value, a voltage difference is large, thereby enabling charging to be performed in a relatively short period of time. That is, the time for voltage equalization can be reduced. Here, when turning on two or more switching elements, the controller 140 may apply an on/off control signal at a higher frequency than the frequency at which a control signal for turning on one switching element turns on another switching element, thereby reducing the load on the cell to be charged.

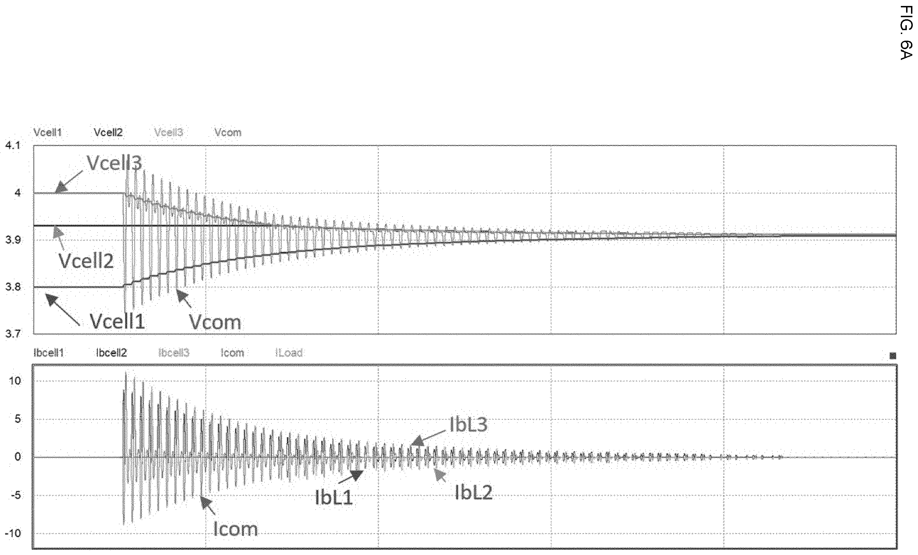

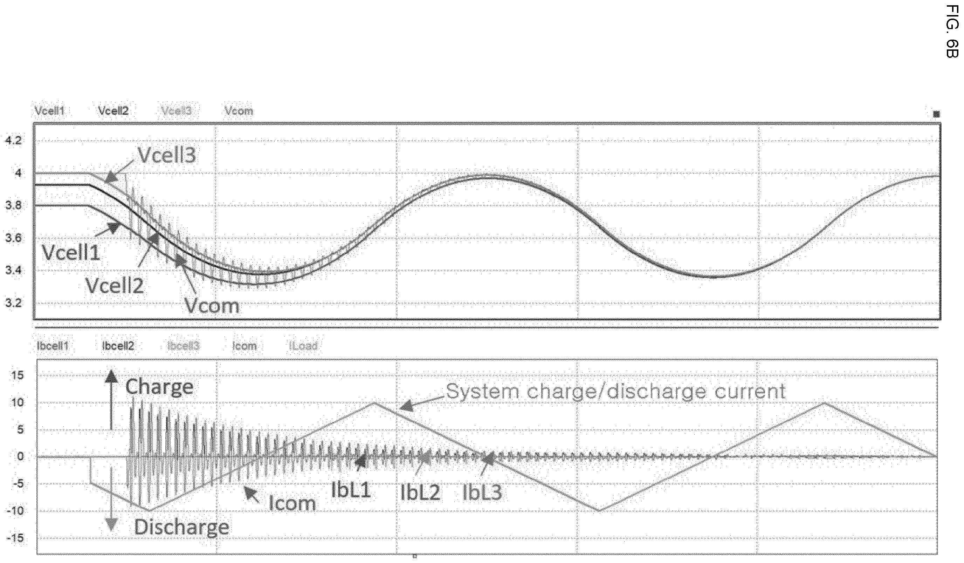

Referring to FIG. 6A, simulation results for voltage equalization when the battery cell group 110 is not charged and discharged are shown. Referring to FIG. 6B, simulation results for voltage equalization when the battery cell group 110 is charged and discharged are shown.

In FIGS. 6A and 6B, three battery cell groups 110 may be provided, the voltage of the first battery cell Cell_1 may be 3.8 V, the voltage of the second battery cell Cell_2 may be 3.93 V, and the voltage of the third battery cell Cell_3 may be 4 V. Here, FIGS. 6A and 6B show simulation results for voltage over time, and it can be seen that when the battery cell groups 110 are not separately charged and discharged, and after a certain period of time even when the battery cell group 110 is charged and discharged, the voltages are equalized between the battery cell groups 110 through charging and discharging. That is, the voltage equalization apparatus 100 of battery cells enables voltage equalization even while the battery cell groups 110 are charged and discharged.

In the voltage equalization apparatus 100 of the battery cells, the voltages may be equalized by discharging the battery cell group 110 having a high cell voltage and charging the battery cell group 110 having a low cell voltage. In addition, in the voltage equalization apparatus 100 of the battery cells, by controlling the connection between the capacitor 130 and the battery cell group 110 through one capacitor 130 and the switching unit 120 having a plurality of switching elements, voltage equalization can be achieved in a short time.

As described above, the voltage equalization apparatus of battery cells according to some embodiments of the present disclosure may control electrical connections between a plurality of serially connected battery cells and a capacitor through a plurality of switching elements, thereby enabling voltage equalization in a short time without lowering the efficiency.

While aspects of some embodiments have been described to practice the voltage equalization apparatus of battery cells according to the present disclosure, it should be understood that the embodiments described herein should be considered in a descriptive sense only and not for purposes of limitation, and various changes in form and details may be made therein without departing from the scope of the disclosure as defined by the following claims, and their equivalents.

### List of reference signs

- 100: Voltage equalization apparatus
- 110: Battery cell group
- 120: Switching unit
- 121: First switching unit
- 122: Second switching unit
- 130: Capacitor
- 140: Controller

## Claims

1. A voltage equalization apparatus (100) of a plurality of battery cells, comprising:
a battery cell group (110) in which the plurality of battery cells are connected in series;
a switching unit (120) electrically connected to the battery cell group (110) and including a plurality of switching elements;
a capacitor (130) electrically connected to the switching unit (120); and
a controller (140) electrically connected to the battery cell group (110) and the switching unit (120), and configured to receive respective voltages of the plurality of battery cells, and to control the plurality of switching elements to turn on or off according to voltage levels of the plurality of battery cells,
wherein the capacitor (130) is connected in parallel with at least one battery cell of the battery cell group (110) through the control of the switching unit (120) by the controller (140).

2. The voltage equalization apparatus (100) of claim 1, wherein in the battery cell group (110), n battery cells are sequentially connected in series, and the switching unit (120) comprises:
a first switching unit (121) including n+1 switching elements electrically connected to positive or negative electrodes of the n battery cells; and
a second switching unit (122) including n switching elements electrically connected to the n battery cells in parallel with each other.

3. The voltage equalization apparatus (100) of claim 2, wherein in the respective switching elements of the first switching unit (121), a first electrode is electrically connected to a positive electrode and a negative electrode of each of the n battery cells of the battery cell group (110), respectively, and a second electrode is electrically connected to the first electrode and the second electrode of each of the n switching elements of the second switching unit (122), respectively.

4. The voltage equalization apparatus (100) of any of claims 2 or 3, wherein control electrodes of (n + 1) switching elements of the first switching unit (121) and control electrodes of n switching elements of the second switching unit (122) are electrically connected to the controller (140) and are configured to be turned on or off by a control signal of the controller (140).

5. The voltage equalization apparatus (100) of any of claims 1 to 4, wherein after charging the capacitor (130) by electrically connecting in parallel to the capacitor (130) a battery cell having a largest voltage in the battery cell group (110), the controller (140) is configured to charge the battery cell as the capacitor (130) is discharged by electrically connecting in parallel to the capacitor (130) a battery cell having a smallest voltage in the battery cell group (110).

6. The voltage equalization apparatus (100) of any of claims 1 to 4, wherein after charging the capacitor (130) by electrically connecting in parallel to the capacitor (130) two battery cells having a largest voltage in the battery cell group (110), the controller (140) is configured to charge the battery cell as the capacitor (130) is discharged by electrically connecting in parallel to the capacitor (130) a battery cell having a smallest voltage in the battery cell group (110).

7. The voltage equalization apparatus (100) of claim 6, wherein the two battery cells having the largest voltage in the battery cell group (110) are connected in series, and the two battery cells connected in series are connected in parallel to the capacitor (130).

8. The voltage equalization apparatus (100) of any of claims 1 to 7, wherein the controller (140) is configured to periodically monitor and compare a plurality of battery cells included in the battery cell group (110) to identify and select a battery cell having a largest voltage and a battery cell having a smallest voltage.

9. The voltage equalization apparatus (100) of any of claims 1to 8, wherein the battery cell group (110) includes a first through nth battery cell, where n is an integer greater than 1, the negative electrode of the first battery cell is electrically connected to the positive electrode of the second battery cell, the negative electrode of the second battery cell is electrically connected to the positive electrode of the third battery cell, and the negative electrode of the (n-1)th battery cell is electrically connected to the positive electrode of the nth battery cell.

10. The voltage equalization apparatus (100) of claim 9, wherein the first switching unit (121) includes a 1a through an na switching element, where n is an integer greater than 1, of which the first electrodes are electrically connected to the negative electrodes of the first through nth battery cells, respectively, and a 0a switching element of which the first electrode is electrically connected to the positive electrode of the first battery cell.

11. The voltage equalization apparatus (100) of claims 9 or 10, wherein the second switching unit (122) includes a 1b through an nb switching element, where n is the integer greater than 1, which are electrically connected in parallel to the first through nth battery cells, respectively.

12. The voltage equalization apparatus (100) of any of claims 9 to 11, wherein the 1a through na switching elements of the first switching unit (121) have second electrodes respectively electrically connected to the second electrodes of the 1b through nb switching element of the second switching unit (122), and the second electrode of the 0a switching element is electrically connected to the first electrode of the 1b switching element of the second switching unit (122).

13. The voltage equalization apparatus (100) of any of claims 1 to 12, wherein in response to the battery cell group (110) being in a charge/discharge mode, the controller (140) is configured to periodically control driving of the switching unit (120) to equalize voltages of the plurality of battery cells included in the battery cell group (110) through the capacitor (130).

14. The voltage equalization apparatus (100) of any of claims 1 to 13, wherein based on turning on two or more switching elements, the controller (140) is configured to apply an on/off control signal at a higher frequency than the frequency at which a control signal for turning on one switching element turns on another switching element.

15. The voltage equalization apparatus (100) of any of claims 1 to 14, wherein the control of the switching unit (120) by the controller (140) is performed periodically at time intervals.
